# FASCICULE DE BREVET EUROPEEN

(11) **EP 2 313 747 B1**
(45) Date de publication et mention de la délivrance du brevet: **04.05.2016**
(21) Numéro de dépôt: 09777669.4
(22) Date de dépôt: 05.08.2009
(51) Int. Cl.: G01D 11/28, B60K 37/02

(54) **COMPTEUR GRADUÉ ET RÉTROÉCLAIRÉ COMPORTANT DES MOYENS POUR SURILLUMINER UNE PARTIE DES GRADUATIONS**
MESSINSTRUMENT MIT EINER VON HINTEN BELEUCHTETEN SKALA, UND MIT MITTELN ZUR HERVORHEBUNG EINES TEILS DER SKALA
BACKLIT INSTRUMENT WITH GRADUATIONS COMPRISING MEANS FOR HIGHLIGHTING PART OF THE GRADUATIONS

(30) Priorité: 14.08.2008 DE 102008037771; 20.03.2009 FR 0901302
(43) Date de publication de la demande: 27.04.2011
(73) Titulaire: Johnson Controls Technology Company, Holland, MI 49423 (US)
(72) Inventeur: BOX, Benoît, F-95620 Parmain (FR)
(74) Mandataire: Lavialle, Bruno François Stéphane
(86) Numéro de dépôt international: PCT/EP2009/005666
(87) Numéro de publication internationale: WO 2010/017910

(56) Documents cités:
- EP-A1- 1 880 890
- WO-A1-2007/042322
- US-A1- 2008 174 416

## Description

L'invention concerne un compteur de véhicule automobile, rétroéclairé, tel qu'un tachymètre ou un compte-tours, comportant une paroi pourvue de graduations translucides disposées selon un arc de cercle, ainsi que des moyens pour éclairer d'une part l'ensemble de ces graduations, et des moyens pour surilluminer une portion particulière de la région graduée, c'est-à-dire pour la mettre en surbrillance.

### ARRIERE PLAN DE L'INVENTION

Un tel compteur de véhicule qui est connu du document de brevet WO2007042322 est représentée en figure 1 en y étant repérée par 1. Il comporte une plaque support 2 portant des éléments luminescents qui sont ici des diodes 3 régulièrement réparties autour d'une région centrale de cette plaque support.

Cette plaque support 2 porte un guide de lumière 4 ayant une forme générale de révolution comprenant une face supérieure 6 plane délimitée par un contour circulaire, pour diffuser la lumière émise par les éléments luminescents vers sa face supérieure 6, ce qui est représenté schématiquement par des flèches.

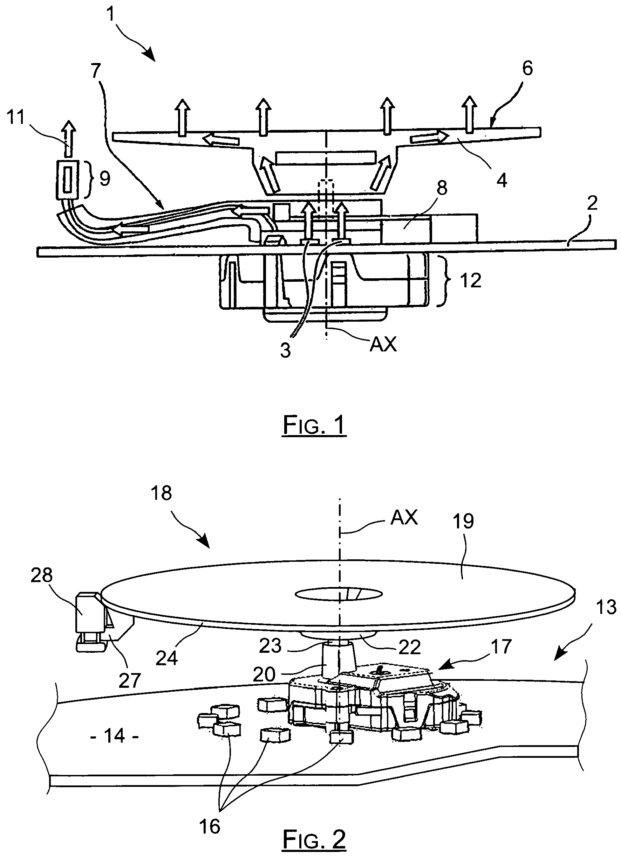

La paroi pourvue de graduations qui n'est pas représentée en figure 1 s'étend parallèlement à la face supérieure 6 en étant fixée directement à cette face.

L'ensemble constitué par les éléments luminescents 3, et le guide de lumière 4 permet de rétroéclairer les graduations de la paroi graduée. Cette paroi graduée est fabriquée dans un matériau translucide, du type plexiglas on analogue, et sa face supérieure est peinte d'une couleur sombre. Les graduations correspondent à des parties non peintes, afin de laisser passer la lumière diffusée par le guide de lumière.

Bien que ces graduations s'étendent sur un arc de cercle ayant un rayon supérieur à celui de la face supérieure 6 du guide de lumière, elles émettent la lumière diffusée par le guide de lumière 4, du fait que cette lumière se disperse dans l'ensemble du matériau translucide formant la paroi graduée.

Typiquement, le compteur comporte une aiguille rotative située en avant de la paroi graduée, et dont l'extrémité est positionnée sur la graduation correspondant à la vitesse du véhicule, la vitesse étant ainsi lisible la nuit grâce au rétroéclairage des graduations.

Complémentairement, ce compteur comprend des moyens pour surilluminer une partie de la région graduée, afin de signifier au conducteur une autre information de vitesse, distincte de celle donnée par l'aiguille rotative. Cette autre information de vitesse est par exemple la valeur à laquelle est réglé le régulateur de vitesse, cette dernière pouvant différer de la vitesse effective lorsque le régulateur a été désenclenché suite à un freinage ou une accélération.

A cet effet, le compteur comporte un organe d'éclairage ponctuel 7, incluant un bras monté rotatif autour de l'axe central AX tout en s'étendant radialement par rapport à cet axe qui coïncide par ailleurs avec l'axe de l'aiguille et l'axe de révolution du guide de lumière.

Plus particulièrement, ce bras 7 est porté par un moyeu rotatif tubulaire 8, et il comprend une extrémité libre 9 orientée vers la paroi non représentée tout en étant située à proximité du contour circulaire délimitant la face avant 4, de manière à être en vis-à-vis des graduations de la paroi graduée.

Comme visible sur les figures, cette extrémité 9 diffuse de la lumière repérée par 11 en direction de la paroi graduée, de manière à surilluminer une région relativement ponctuelle de la portion graduée. Ainsi, la distance séparant l'extrémité 9 de l'axe AX correspond au rayon de l'arc de cercle le long duquel sont situées les graduations.

En ce qui concerne le moyeu rotatif 8, qui entoure l'axe portant l'aiguille rotative, il peut être prévu en matériau opaque ou transparent pour faciliter le passage de la lumière générée par les éléments luminescents vers le guide de lumière 4, compte tenu du fait que par construction, ce moyeu est interposé entre le guide de lumière et la plaque support 2 portant les éléments luminescents 3.

L'aiguille non représentée et l'organe d'éclairage rotatif sont déplacés et asservis en position par un ensemble moteur 12 fixé à la face arrière de la plaque support 2.

### OBJET DE L'INVENTION

Le but de l'invention est de proposer une solution pour réduire le coût de fabrication d'un tel compteur.

### RESUME DE L'INVENTION

A cet effet, l'invention a pour objet un compteur tel qu'un tachymètre ou un compte-tours, comportant une paroi pourvue de graduations translucides disposées selon un arc de cercle, un ou des éléments luminescents portés par une plaque support et un guide de lumière interposé entre la plaque support et la paroi graduée pour diffuser la lumière issue des éléments luminescents vers une face arrière de la paroi graduée afin d'illuminer l'ensemble des graduations, caractérisé en ce que le guide de lumière est monté rotatif autour d'un axe passant par le centre de l'arc de cercle, en ce qu'il comprend des moyens d'asservissement de la position angulaire du guide de lumière, en ce qu'il comprend des moyens de maintien de la paroi graduée distincts du guide de lumière, et en ce que ce guide de lumière intègre un organe d'éclairage ponctuel situé radialement au niveau de l'arc de cercle pour mettre en surbrillance une partie de la région portant les graduations.

Avec cette solution, le nombre de pièces constitutives du compteur est réduit puisque l'organe d'éclairage ponctuel est porté directement par le guide de lumière rotatif au lieu d'être porté par des moyens additionnels distincts de ce guide de lumière.

L'invention concerne également un compteur tel que défini ci-dessus, dans lequel l'extrémité de l'organe d'éclairage ponctuel comporte un élément luminescent tel qu'une diode.

L'invention concerne également un compteur tel que défini ci-dessus, dans lequel l'élément luminescent de l'organe d'éclairage ponctuel est alimenté électriquement par des fils électriques reliés à un organe d'alimentation porté par la plaque support et à cet organe d'éclairage ponctuel.

L'invention concerne également un compteur tel que défini ci-dessus, dans lequel le guide de lumière a une forme générale de révolution ayant un diamètre nominal inférieur à celui de l'arc de cercle, et dans lequel ce guide de lumière comprend en outre un bras s'étendant radialement pour présenter une extrémité située au delà de son diamètre nominal, l'organe d'éclairage ponctuel étant porté par ce bras.

L'invention concerne également un compteur tel que défini ci-dessus, dans lequel l'organe d'éclairage ponctuel comporte un guide de lumière ayant une extrémité située en vis-à-vis de l'arc de cercle le long duquel sont disposées les graduations.

### BREVE DESCRIPTION DES FIGURES

La figure 1 est une vue latérale d'un compteur connu de l'Etat de la technique ;
La figure 2 est une vue en perspective montrant différents composants du compteur selon l'invention ;
La figure 3 est une vue latérale en coupe des composants du compteur selon l'invention ;
La figure 4 est une vue de dessus des éléments du compteur selon l'invention ;
La figure 5 est une vue de dessus du compteur montrant la face avant de sa paroi graduée.

### DESCRIPTION DETAILLEE DE L'INVENTION

L'idée à la base de l'invention est de réunir l'organe d'éclairage ponctuel et le guide de lumière dans un même élément monté rotatif, la paroi graduée étant quant à elle portée par des moyens distincts du guide de lumière.

Comme visible dans la figure 1, le compteur selon l'invention comporte une plaque support 13 présentant une face supérieure ou face avant 14 sur laquelle sont montés un ensemble de douze éléments luminescents 16 disposées en cercle autour d'un axe central AX normal à la face avant 14.

Ces éléments 16 qui sont ici des diodes entourant une embase 17 qui est elle aussi portée par la plaque support 13. Le guide de lumière qui est repéré par 18 a une forme générale de révolution autour de l'axe AX

Ce guide de lumière qui est fabriqué dans un matériau translucide est délimité par une face supérieure 19 plane, et par une face inférieure de révolution 21 généralement bombée et comportant dans sa région centrale une protubérance 22 prolongée par une portion cylindrique délimitant un pied central 23. La jonction de la face inférieure avec la face supérieure correspond sensiblement au contour plan circulaire 24 délimitant la face supérieure 19.

Ce guide de lumière 18 comprend en outre une ouverture centrale 26 orientée selon l'axe AX, cette ouverture 26 débouchant d'une part dans la face supérieure 19 et d'autre part dans l'extrémité inférieure du pied 23, ce pied étant ainsi généralement tubulaire.

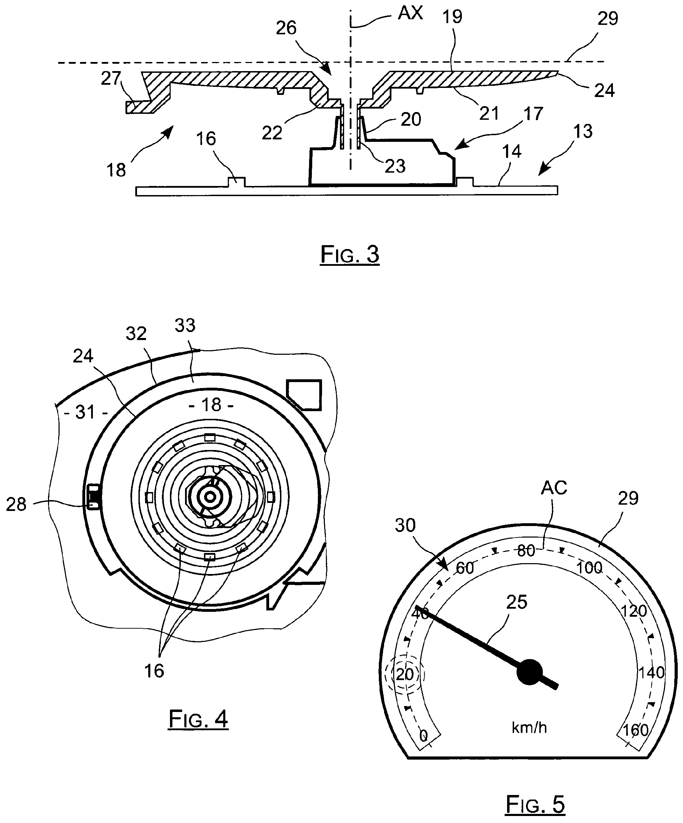

Comme visible dans les figures 2 et 3, le pied tubulaire 23 est engagé dans une portion supérieure tubulaire 20 de l'embase 17, de manière à être supporté par cette embase tout en pouvant pivoter autour de l'axe AX.

Complémentairement, le compteur est équipé d'une aiguille 25 visible en figure 5 qui est portée par axe central traversant l'ouverture 26 en s'étendant selon la direction AX. L'embase 17 est quant à elle pourvue de moyens motorisés non visibles dans les figures qui permettent de placer l'aiguille 25 et le guide de lumière 18 dans des positions angulaires voulues et indépendantes l'une de l'autre.

Comme visible dans les figures, le guide de lumière 18 comporte un bras radial 27 prenant naissance à sa face inférieure 21, dans une région proche du contour 24, et s'étendant radialement par rapport à l'axe AX, au delà du contour 24 tout en étant situé sous le niveau de la face supérieure 19.

Ce bras 27 porte un organe d'éclairage ponctuel 28 qui génère de la lumière en direction de la paroi graduée 29, de manière à éclairer une partie de la région graduée 30. Concrètement, cet organe d'éclairage ponctuel 28 qui comporte ici une diode électroluminescente génère une tâche de lumière à la face arrière de la paroi graduée 29, de façon à surilluminer une graduation.

Dans l'exemple des figures, l'organe d'éclairage ponctuel 28 qui comporte une diode est alimenté électriquement par des fils non représentés, et ayant chacun une extrémité connectée à l'organe 28 et une autre extrémité connectée à un élément d'alimentation porté par la face avant 14 de la plaque support 13.

Ces fils ont la longueur et la souplesse requises pour autoriser une rotation du guide de lumière 18, et donc de l'organe d'éclairage 28, sur une amplitude de l'ordre de trois quarts de tours, la partie basse du compteur, c'est-à-dire la partie basse de la paroi graduée 29 n'étant généralement ni graduée ni rétro éclairée.

En ce qui concerne la paroi graduée 29, elle peut être portée par une plaque frontale 31, représentée en figure 4, et comportant une ouverture centrale 32 d'un diamètre supérieur au diamètre du contour 24.

Cette plaque frontale 31 est avantageusement portée par la plaque support 13 au moyen de pieds intermédiaires non représentés, en s'étendant parallèlement à cette dernière, et en étant située légèrement au dessus du niveau de la face supérieure 19 du guide de lumière 18. L'ouverture centrale 32 entoure ainsi le contour 24 du guide de lumière 18 lorsque l'ensemble est vu de dessus comme dans la figure 4, de manière à délimiter une fente circulaire 33, située en vis-à-vis des graduations de la paroi graduée, et dans laquelle l'organe d'éclairage ponctuel 28 est déplacé lorsque le guide de lumière 18 tourne.

La paroi graduée 29 peut être directement collée à la plaque frontale 31, tout en ayant ses graduations situées dans une zone 30 s'étendant selon un arc de cercle AC, cette zone 30 correspondant à la fente 33. Comme visible en figure 4, cette zone 30 est une portion de couronne circulaire ayant un diamètre interne correspondant sensiblement au diamètre du contour 24 et un diamètre externe correspondant sensiblement au diamètre de l'ouverture 32.

Ainsi, l'organe d'éclairage ponctuel 28 permet d'éclairer une partie de la zone graduée 30, cette partie étant définie par la position angulaire du guide de lumière 18. Dans la configuration des figures 4 et 5, la position angulaire du guide de lumière 18 place l'organe d'éclairage additionnel en vis-à-vis de l'inscription "20" de la région graduée 30 pour mettre cette inscription en surbrillance.

## Revendications

1. Compteur tel qu'un tachymètre ou un compte-tours, comportant une paroi (29) pourvue de graduations translucides disposées selon un arc de cercle (AC), un ou des éléments luminescents (16) portés par une plaque support (13) et un guide de lumière (18) interposé entre la plaque support (13) et la paroi graduée (29) pour diffuser la lumière issue des éléments luminescents (16) vers une face arrière de la paroi graduée (29) afin d'illuminer l'ensemble des graduations, **caractérisé en ce que** le guide de lumière (18) est monté rotatif autour d'un axe (AX) passant par le centre de l'arc de cercle (AC), **en ce qu'**il comprend des moyens (17) d'asservissement de la position angulaire du guide de lumière (18), **en ce qu'**il comprend des moyens de maintien de la paroi graduée distincts du guide de lumière (18), et **en ce que** ce guide de lumière (18) intègre un organe d'éclairage ponctuel (28) situé radialement au niveau de l'arc de cercle (AC) pour mettre en surbrillance une partie de la région portant les graduations.

2. Compteur selon la revendication 1, dans lequel l'extrémité de l'organe d'éclairage ponctuel (28) comporte un élément luminescent tel qu'une diode.

3. Compteur selon la revendication 2, dans lequel l'élément luminescent de l'organe d'éclairage ponctuel (28) est alimenté électriquement par des fils électriques reliés à un organe d'alimentation porté par la plaque support (13) et à cet organe d'éclairage ponctuel (28).

4. Compteur selon l'une des revendications précédentes, dans lequel le guide de lumière (18) a une forme générale de révolution ayant un diamètre nominal inférieur à celui de l'arc de cercle (AC), et dans lequel ce guide de lumière (18) comprend en outre un bras (27) s'étendant radialement pour présenter une extrémité située au delà de son diamètre nominal, l'organe d'éclairage ponctuel (28) étant porté par ce bras (27).

5. Compteur selon la revendication 1 ou 4, dans lequel l'organe d'éclairage ponctuel (28) comporte un guide de lumière (18) ayant une extrémité située en vis-à-vis de l'arc de cercle (AC) le long duquel sont disposées les graduations.

## Patentansprüche

1. Zähler, wie zum Beispiel ein Tachometer oder ein Drehzahlmesser, umfassend eine Wand (29), die mit lichtdurchlässigen Gradeinteilungen versehen ist, die in einem Kreisbogen (AC) angeordnet sind, ein oder mehr lumineszierende Elemente (16), die von einer Trägerplatte (13) getragen werden, sowie einen Lichtleiter (18), der zwischen der Trägerplatte (13) und der mit einer Gradeinteilung versehenen Wand (29) angeordnet ist, um das von den lumineszierende Elementen (16) stammende Licht in Richtung einer Rückseite der mit einer Gradeinteilung versehenen Wand (29) auszustrahlen, um die Gesamtheit der Gradeinteilungen zu beleuchten, **dadurch gekennzeichnet, dass** der Lichtleiter (18) drehbar um eine Achse (AX) angeordnet ist, die durch den Mittelpunkt des Kreisbogens (AC) verläuft, dass er Regelungsmittel (17) zur Regelung der Winkelposition des Lichtleiters (18) umfasst, dass er Mittel zum Halten der mit einer Gradeinteilung versehenen Wand umfasst, die sich von dem Lichtleiter (18) unterscheiden, und dass dieser Lichtleiter (18) ein Organ (28) zur punktförmigen Beleuchtung integriert, das radial im Bereich des Kreisbogens (AC) angeordnet ist, um einen Teil des die Gradeinteilungen tragenden Bereichs hervorzuheben.

2. Zähler nach Anspruch 1, wobei das Ende des Organs (28) zur punktförmigen Beleuchtung ein lumineszierendes Element, wie zum Beispiel eine Diode, umfasst.

3. Zähler nach Anspruch 2, wobei das lumineszierende Element des Organs (28) zur punktförmigen Beleuchtung elektrisch über elektrische Kabel versorgt wird, die mit einem von der Trägerplatte (13) getragenen Stromversorgungsorgan und mit diesem Organ (28) zur punktförmigen Beleuchtung verbunden sind.

4. Zähler nach einem der vorhergehenden Ansprüche, wobei der Lichtleiter (18) eine allgemeine Rotationsform hat, die einen nominalen Durchmesser hat, der kleiner als der des Kreisbogens (AC) ist, und wobei dieser Lichtleiter (18) ferner einen Arm (27) umfasst, der sich radial erstreckt, um ein Ende aufzuweisen, das sich jenseits des nominalen Durchmessers des Lichtleiters befindet, wobei das Organ (28) zur punktförmigen Beleuchtung von diesem Arm (27) getragen wird.

5. Zähler nach Anspruch 1 oder 4, wobei das Organ (28) zur punktförmigen Beleuchtung einen Lichtleiter (18) umfasst, der ein Ende hat, das sich gegenüber dem Kreisbogen (AC) befindet, längs desselben die Gradeinteilungen angeordnet sind.

## Claims

1. Gauge such as a speedometer or a revolution counter, including a wall (29) provided with translucent graduations disposed over a circular arc (AC), one or more light-emitting elements (16) carried by a support plate (13) and a light guide (18) disposed between the support plate (13) and the graduated wall (29) so as to diffuse the light emitted by the light-emitting elements (16) toward a back face of the graduated wall (29) in order to illuminate all of the graduations, **characterised in that** the light guide (18) is mounted to pivot about an axis (AX) passing through the centre of the circular arc (AC), **in that** it includes means (17) for controlling the angular position of the light guide (18), **in that** it includes means for holding the graduated wall distinct from the light guide (18), and **in that** this light guide (18) incorporates a spot lighting member (28) situated radially at the same level as the circular arc (AC) so as to highlight a portion of the region carrying the graduations.

2. Gauge according to claim 1, wherein the end of the spot lighting member (28) includes a light-emitting element such as a diode.

3. Gauge according to claim 2, wherein the light-emitting element of the spot lighting member (28) is powered electrically via electrical wires connected to a power supply member carried by the support plate (13) and to this spot lighting member (28).

4. Gauge according to any one of the preceding claims, wherein the light guide (18) is of circularly symmetrical general shape and has a nominal diameter less than that of the circular arc (AC), and wherein this light guide (18) further includes an arm (27) extending radially so as to have an end situated beyond its nominal diameter, the spot lighting member (28) being carried by this arm (27).

5. Gauge according to claim 1 or 4, wherein the spot lighting member (28) includes a light guide (18) having one end situated facing the circular arc (AC) along which the graduations are disposed.
